# FASCICULE DE BREVET EUROPEEN

(11) **EP 0 675 033 B1**
(45) Date de publication et mention de la délivrance du brevet: **02.09.1998**
(21) Numéro de dépôt: 95104516.0
(22) Date de dépôt: 28.03.1995
(51) Int. Cl.: B62D 1/16, B62D 29/04, B62D 21/17

(54) **Colonne de direction pour véhicule automobile**
Lenksäule für ein Kraftfahrzeug
Steering column for a motor vehicle

(30) Priorité: 31.03.1994 FR 9403818
(43) Date de publication de la demande: 04.10.1995
(73) Titulaire: VALEO ELECTRONIQUE, 94042 Creteil Cédex (FR)
(72) Inventeur: Lagier, Daniel, F-92000 Nanterre (FR)
(74) Mandataire: Gamonal, Didier

(56) Documents cités:
- EP-A- 0 431 986
- DE-C- 3 600 134
- AUTOMOTIVE ENGINEER, vol. 9, SOUTHEDN-ON-SEA GB, page 54 'b. Plastic systems for vehicle bodies'

## Description

La présente invention concerne les colonnes de direction pour véhicule automobile.

Ainsi qu'on le sait une telle colonne a une forme tubulaire pour le passage de l'arbre de direction.

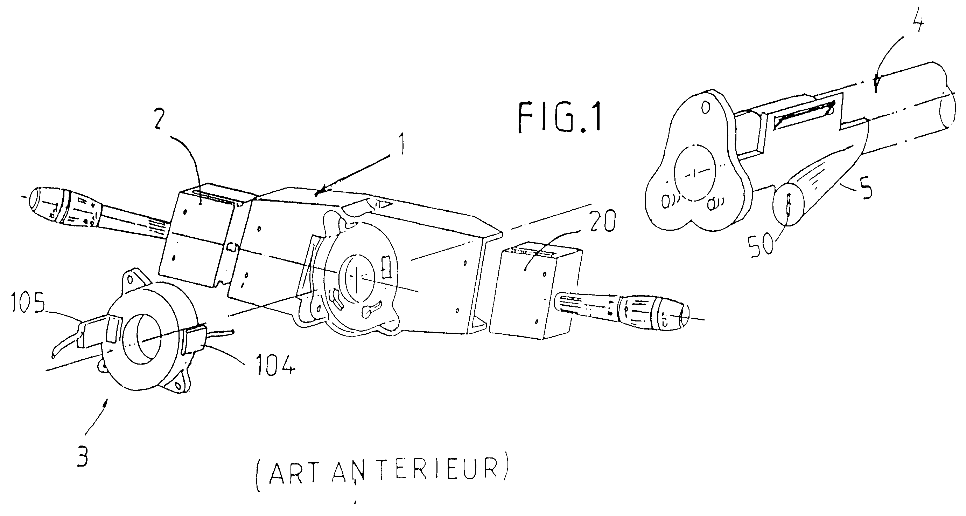

Cette colonne est métallique en sorte qu'elle est relativement lourde. Un tube métallique 5 (figure 1) est usuellement soudé latéralement sur la colonne 4. Ce tube sert au logement de l'antivol, dont on voit en 50 le trou de serrure.

A cette serrure antivol est associé un interrupteur électrique d'allumage permettant de commander la mise en marche du véhicule automobile, ainsi que l'alimentation de certains accessoires tels que la radio, la lunette arrière etc.

Cet interrupteur est parcouru par des courants élevés, par exemple 50 ampères en position démarrage avec les phares allumes. A son extrémité frontale cette colonne 4 présente une platine pour fixation, par exemple par vissage, d'un support en matière synthétique. Ce support porte des commutateurs manoeuvrables par le conducteur du véhicule, tels que le commutateur éclairage, signalisation, brouillard avant et arrière, et le commutateur essuie-lave vitres avant et arrière.

Centralement ce support 1 peut servir également de logement et à la fixation d'un contacteur tournant 3 associé par exemple à un dispositif de sécurité à coussin gonflable, dénommé "Air-Bag", monté dans le volant du véhicule et qui se gonfle en cas d'accident pour protéger le conducteur. Ce contacteur tournant peut être également relié à la commande de l'avertisseur sonore du véhicule.

En variante ce support 1 peut porter la commande de l'installation de radio du véhicule ou d'autres accessoires, ainsi qu'un capteur d'angle de rotation du volant.

Dans le document DE-C-3 600 134, conforme au préambule de la revendication 1, on a proposé de réaliser la colonne de direction en matière synthétique électriquement isolante et moulable pour rendre ladite colonne plus légère et pour réaliser le support d'un seul tenant avec celle-ci.

Il en résulte que la colonne de direction 4 porte directement ou indirectement de nombreux appareils du tue électrique, électronique ou électromécanique, ainsi qu'éventuellement des lampes des fusibles etc.

Par commodité tous ces appareils seront dénommés appareils électriques.

Ces appareils électriques sont reliés par des câbles électriques, formant le plus souvent des faisceaux, au reste du circuit électrique du véhicule, connectés à la batterie de celui-ci.

Par exemple, à la figure 1, on voit en partie en 104 et en 105 les faisceaux électriques associés au contacteur tournant 3. Des liaisons inter-appareils peuvent également exister.

Il en résulte qu'une multitude de câbles électriques et/ou de faisceaux électriques longent la colonne de direction et qu'il faut les attacher à ladite colonne pour notamment limiter les bruits et éviter une détérioration de ceux-ci.

Ces fixations augmentent les temps de montage sur les chaînes de fabrication du constructeur automobile.

En fonction du niveau d'équipement du véhicule, le volume occupé par les faisceaux devient problématique, l'implantation desdits faisceaux devenant difficile par manque de place.

Il est également important dans le cas d'une colonne de direction du type de celle décrite dans le document DE-C-3 600 134 de rendre plus robuste ladite colonne.

La présente invention a pour objet de pallier les inconvénients précités , de répondre à ce souhait et donc de créer, de manière simple et économique, une colonne de direction légère et robuste permettant une réduction des temps de montage sur les chaînes de fabrication du véhicule, tout en procurant d'autres avantages.

Suivant l'invention, une colonne de direction, en matière synthétique électriquement isolante et moulable, portant des appareils électriques est caractérisée en ce qu'elle est renforcée par des conducteurs électriques associés auxdits appareils électriques.

Grâce à l'invention la colonne de direction est, d'une part, plus légère puisqu'elle est à base de matière synthétique, ici telle que du polyamide 6.6 chargé de fibres de verre, ou autres matériaux thermoplastiques possédant de bonnes propriétés mécaniques, et est, d'autre part, robuste puisqu'elle est renforcée par les conducteurs électriques. En outre, les temps de montage sur chaîne sont réduits puisqu'il n'y a plus à fixer les câbles électriques et/ou les faisceaux.

De plus on obtient un meilleur esthétisme et les conducteurs électriques ne risquent pas d'être endommagés, notamment sous l'effet des vibrations puisqu'ils sont intégrés à la colonne.

De préférence ces conducteurs électriques sont noyés dans la colonne, avantageusement en matière moulable, en sorte qu'ils sont protégés et que les risques de court-circuit sont annulés.

Dans tous les cas, on obtient de manière simple et économique une diminution du nombre des pièces, une réduction des pertes électriques, une fiabilité accrue et une maintenance simplifiée.

Selon une caractéristique les conducteurs électriques appartiennent à au moins un réseau métallique électriquement conducteur de lames ou de bandes prédécoupées, par exemple à la presse, sur lequel est surmoulée la colonne en matériau synthétique électriquement isolant, ledit réseau étant galbé à cet effet et présentant, de manière connue en sol, initialement des pontets de jonction mécanique que l'on coupe par la suite.

Ainsi ce réseau constitue une armature de rigidification pour la colonne de direction. Cette solution est particulièrement simple et économique et permet de réaliser aisément des connecteurs avec les extrémités des lames.

De préférence on prévoit plusieurs réseaux métalliques prédécoupés et ce en fonction des équipements et/ou des intensités des courants électriques. Il y a ainsi une réduction des pertes électriques.

Ces réseaux peuvent donc être d'épaisseur différente. Par exemple le réseau associé à l'interrupteur électrique d'allumage aura une épaisseur plus importante que les autres réseaux.

Comme dans le document DE-C-3 600 134 le support de commutateurs est d'un seul tenant avec la colonne de direction et il en est de même du tube de logement de l'antivol. Avantageusement le support de commutateurs est d'un seul tenant avec la colonne de direction ainsi que les connecteurs associés auxdits commutateurs.

Ces dispositions permettent de réduire encore les temps de montage ainsi que le nombre de pièces à assembler. En outre on supprime une opération de soudage en ce qui concerne le tube de logement de l'antivol.

Grâce à l'invention on peut standardiser la colonne de direction. En effet, différentes options peuvent être prévues sur les véhicules, en sorte que l'on peut créer une colonne de direction unique avec des connecteurs et des conducteurs électriques englobant toute les fonctions possibles.

La description qui va suivre illustre l'invention en regard des dessins annexés dans lesquels :
- la figure 1 est une vue en perspective éclatée d'une colonne de direction selon l'art antérieur;
- la figure 2 est une vue analogue à la figure 1 montrant la colonne de direction selon l'invention ;
- les figures 3 et 4 sont des demi-vues en coupe longitudinale montrant les conducteurs électriques selon l'invention ainsi que différents montages de commutateurs sur leur support associé.

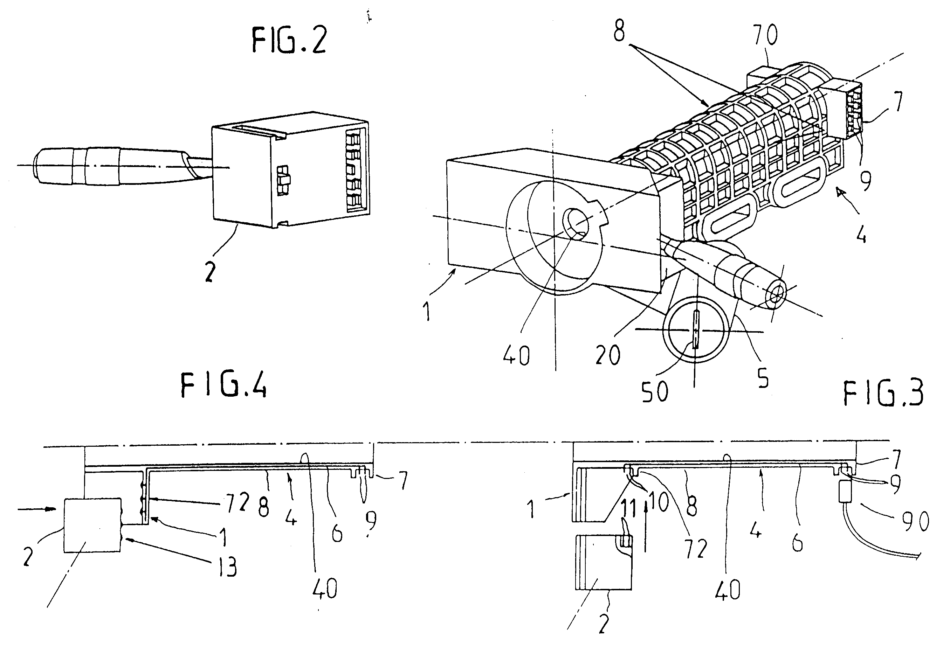

Dans les figures 2 à 4 les éléments communs a l'invention et à l'état de la technique seront affectés des mêmes signes de référence.

Ainsi on voit en 4 la colonne de direction, de forme tubulaire à alésage central 40, pour véhicule automobile portant des appareils du type électrique, électronique et électromécanique, dits ci-après par commodité appareils électriques, tels que les commutateurs 2,20 précités. La colonne 4 de direction est ici en matière synthétique électriquement isolante et moulable.

Suivant l'invention une telle colonne 4 est caractérisée en ce qu'elle est renforcée par des conducteurs électriques 6 associés auxdits appareils électriques 2,20. Le nombre des conducteurs 6 dépend des applications et donc des appareils électriques portés par la colonne et de leur nombre.

Avantageusement la colonne 4 est en matière synthétique moulable, elle peut être par exemple en polyamide 6.6, avantageusement chargée de fibres de verre. D'une manière générale on peut utiliser tout autre matériau thermoplastique de bonne résistance mécanique.

Avantageusement les conducteurs électriques 6 forment au moins un réseau, sous forme d'un circuit métallique électriquement conducteur de lames ou de bandes prédécoupées, par exemple à la presse, avec formation de pontets de liaison mécanique que l'on coupe ultérieurement.

Ce réseau peut être par exemple à base de laiton ou de cuivre et comporte des lames qui s'étendent longitudinalement le long de la colonne 4 en étant noyées au moins en majeure partie dans ladite colonne.

Avantageusement on prévoit plusieurs réseaux ou nappes et ce en fonction des courants électriques traversant lesdits réseaux. Ces réseaux peuvent donc avoir des épaisseurs différentes, en étant superposés et séparés par la matière isolante de la colonne 4.

Avantageusement on donne une forme galbée au réseau et on surmoule la colonne de direction en matériau thermoplastique sur ledit réseau.

Dans la forme de réalisation représentée, la colonne 4 présente un réseau de nervures quadrillées de rigidification ceinturant ici la colonne 4 (figure 3)

Ainsi on peut implanter les conducteurs électriques 6 et leurs réseaux de lames dans lesdites nervures 8. La colonne 4 est ainsi renforcée et donc rigidifiée par les nervures 8 et les réseaux électriques, de forme galbée et constituant l'armature de rigidification de la colonne.

Ces conducteurs électriques 6 noyés dans les nervures 8, au moins en majeure partie, peuvent donc s'étendre non seulement longitudinalement, mais également transversalement et/ou sommitalement ainsi qu'au niveau du fond de la colonne à la faveur des réseaux de conducteurs 6, tout cela dépendant des applications, et notamment de l'implantation des appareils électriques.

Ainsi avantageusement les réseaux se terminent par des connecteurs 7,70,72. Les corps des connecteurs 7,70,72 sont d'un seul tenant avec la colonne de direction et les languettes 9,10 de ceux-ci sont formées par les extrémités libres apparentes des lames des réseaux des conducteurs 6 pliés à 90° ou dans l'axe de la colonne suivant les applications.

Ainsi il ne reste plus par exemple qu'à connecter le faisceau électrique du véhicule 90 raccourci au connecteur 7 (figure 3), ledit faisceau 90 appartenant au circuit du véhicule connecté à la batterie de celui-ci. Cette opération se fait en final sur les chaînes de montage du véhicule, aucun câble électrique et/ou faisceau électrique étant à fixer sur la colonne 4 puisque celle-ci comporte les conducteurs électriques propres à être reliés, via lesdits connecteurs, aux appareils électriques portés par ladite colonne de direction.

Bien entendu la colonne 4 peut présenter des connecteurs en attente que l'on branche selon les applications.

Avantageusement le support 1 de commutateur 2,20 peut être d'un seul tenant avec la colonne 4 en étant venu de moulage avec celle-ci, tout comme les connecteurs 7,70,72 précités et le tube 5 de l'antivol à commande mécanique, par exemple à serrure, ou électronique codé. On appréciera que cette colonne est esthétique et que les connexions électriques entre notamment les commutateurs 2,20 et le support 1 sont simplifies. En effet, les réseaux des conducteurs électriques 6 forment au niveau du support 1 un connecteur 72 pour par exemple le commutateur 2 présentant lui-même un connecteur avec des languettes 11. Le connecteur 72 présente des languettes complémentaires 10 en sorte que l'on peut monter le commutateur 2 par simple enfilage axial, perpendiculairement à l'axe de symétrie de la colonne 4, le support 1 formant une glissière pour le commutateur 2 formant coulisse (figure 3)

En variante (figure 4) on peut monter axialement le commutateur 2 présentant des contacts à plats, le connecteur 72 associé au support 1 présentant des contacts à plats complémentaires.

Ainsi on réduit avantageusement la hauteur des commutateurs du fait de l'absence de câbles. Bien entendu, selon les applications, une partie des conducteurs 6 peut être apparente. La colonne 4 peut être en deux parties, les conducteurs 6 étant pris en sandwich. Après on fixe ensemble les parties par exemple par soudage à ultrason.

On appréciera que la forme de la partie de connexion des commutateurs n'est pas dictée par la présence de fils conducteurs comme dans l'art antérieur.

## Revendications

1. Colonne de direction pour véhicule automobile, en matière synthétique électriquement isolante et moulable, portant des appareils électriques (2,20), caractérisée en ce qu'elle est renforcée par des conducteurs électriques (6) associés auxdits appareils électriques (2,20).

2. Colonne selon la revendication 1, caractérisée en ce qu'elle est en matière thermoplastique possédant une bonne résistance mécanique telle que du polyamide 6.6 chargé de fibres de verre.

3. Colonne selon la revendication 1 ou 2, caractérisée ce que les conducteurs électriques (6) appartiennent à au moins un réseau métallique prédécoupé.

4. Colonne selon la revendication 3, caractérisée en ce que la matière électriquement isolante de la colonne de direction est surmoulée sur ledit réseau métallique de forme galbée.

5. Colonne selon la revendication 3 ou 4, caractérisé en ce qu'elle comporte plusieurs réseaux métalliques prédécoupés.

6. Colonne selon la revendication 5, caractérisé en ce que lesdits réseaux ont une épaisseur différente.

7. Colonne selon la revendication 5 ou 6 caractérisé en ce que lesdits réseaux sont superposés et séparés par la matière électriquement isolante de ladite colonne (4).

8. Colonne selon l'une quelconque des revendications 1 à 7, caractérisée en ce qu'elle présente des nervures de rigidification (8), et en ce que les conducteurs électriques (6) sont noyés, au moins en partie, dans lesdites nervures.

9. Colonne selon la revendication 8, caractérisé en ce qu'elle présente un réseau de nervures quadrillées de rigidification ceinturant ladite colonne.

10. Colonne selon l'une quelconque des revendications 1 à 9, caractérisée en ce qu'elle porte d'un seul tenant des connecteurs (7,70,72).

11. Colonne selon la revendication 10, caractérisée en ce que lesdits connecteurs présentent des languettes (9,10) formées par des extrémités des conducteurs électriques (6).

12. Colonne selon l'une quelconque des revendications 1 à 11, caractérisée en ce qu'elle porte d'un seul tenant un support de commutateur ainsi que des connecteurs (72) associés auxdits commutateurs.

13. Colonne selon la revendication 12 caractérisé en ce que au moins un connecteur (72) associé audit support (1) présente des contacts à plats pour pontage du commutateur concerne.

14. Colonne selon l'une quelconque des revendications 1 à 13, caractérisée en ce qu'elle porte d'un seul tenant le tube de l'antivol du véhicule automobile.

15. Colonne selon l'une quelconque des revendications 1 à 14 caractérisé en ce que les conducteurs électriques (6) sont noyés au moins en partie dans la colonne de direction.

## Claims

1. A steering column for a motor vehicle, of electrically insulating and mouldable synthetic material, carrying electrical devices (2, 20), characterised in that it is reinforced by electrical conductors (6) associated with the said electrical devices (2, 20).

2. A column according to Claim 1, characterised in that it is of thermoplastics material having good mechanical strength, for example polyamide 6.6 containing glass fibres.

3. A column according to Claim 1 or Claim 2, characterised in that the electrical conductors (6) are part of at least one pre-cut metallic grid member.

4. A column according to Claim 3, characterised in that the electrically insulating material of the steering column is moulded on the said metallic grid member, which is of curved form.

5. A column according to Claim 3 or Claim 4, characterised in that it includes a plurality of precut metallic grid members.

6. A column according to Claim 5, characterised in that the said grid members are of different thicknesses.

7. A column according to Claim 5 or Claim 6, characterised in that the said grid members are superimposed and separated by the electrically insulating material of the said column (4).

8. A column according to any one of Claims 1 to 7, characterised in that it has stiffening ribs (8), and in that the electrical conductors (6) are at least partly encapsulated in the said ribs.

9. A column according to Claim 8, characterised in that it includes a rectangular grid of stiffening ribs enclosing the said column.

10. A column according to any one of Claims 1 to 9, characterised in that it carries integral connectors (7, 70, 72).

11. A column according to Claim 10, characterised in that the said connectors comprise tongues (9, 10) constituted by the ends of the electrical conductors (6).

12. A column according to any one of Claims 1 to 11, characterised in that it carries an integral switch carrier, together with connectors (72) associated with the said switches.

13. A column according to Claim 12, characterised in that at least one connector (72) associated with the said carrier (1) includes contacts with pads to effect bridging in the switch concerned.

14. A column according to any one of Claims 1 to 13, characterised in that it includes, integrally therewith, the tube of the steering column lock of the motor vehicle.

15. A column according to any one of Claims 1 to 14, characterised in that the electrical conductors (6) are at least partly encapsulated in the steering column.

## Patentansprüche

1. Lenksäule für ein Kraftfahrzeug aus elektrisch nichtleitendem und formbarem Kunststoff, die elektrische Geräte (2, 20) trägt , **dadurch gekennzeichnet,** daß sie durch elektrische Leiter verstärkt (6) ist, die mit den besagten elektrischen Geräten (2, 20) verbunden sind.

2. Lenksäule nach Anspruch 1 , **dadurch gekennzeichnet**, daß sie aus Thermoplast mit einer guten mechanischen Festigkeit besteht, wie etwa aus glasfaserverstärktem Polyamid 6.6.

3. Lenksäule nach Anspruch 1 oder 2 , **dadurch gekennzeichnet,** daß die elektrischen Leiter (6) zu mindestens einem vorgestanzten Metallnetz gehören.

4. Lenksäule nach Anspruch 3 , **dadurch gekennzeichnet**, daß das elektrisch nichtleitende Material der Lenksäule auf dem besagten Metallnetz mit gewölbter Form aufgeformt ist.

5. Lenksäule nach Anspruch 3 oder 4 , **dadurch gekennzeichnet,** daß sie mehrere vorgestanzte Metallnetze umfaßt.

6. Lenksäule nach Anspruch 5 , **dadurch gekennzeichnet**, daß die besagten Netze eine unterschiedliche Dicke aufweisen.

7. Lenksäule nach Anspruch 5 oder 6 , **dadurch gekennzeichnet,** daß die besagten Netze übereinander angeordnet und durch das elektrisch nichtleitende Material der besagten Lenksäule (4) voneinander getrennt sind.

8. Lenksäule nach einem der Ansprüche 1 bis 7 , **dadurch gekennzeichnet,** daß sie Versteifungsrippen (8) aufweist und daß die elektrischen Leiter (6) zumindest teilweise in die besagten Rippen eingelassen sind.

9. Lenksäule nach Anspruch 8 , **dadurch gekennzeichnet**, daß sie ein Netz von schachbrettartigen Versteifungsrippen aufweist, die die besagte Lenksäule umschließen.

10. Lenksäule nach einem der Ansprüche 1 bis 9, **dadurch gekennzeichnet,** daß sie in einstückiger Ausführung Verbinder (7, 70, 72) trägt.

11. Lenksäule nach Anspruch 10, **dadurch gekennzeichnet**, daß die besagten Verbinder Zungen (9, 10) aufweisen, die durch die Enden der elektrischen Leiter (6) gebildet werden.

12. Lenksäule nach einem der Ansprüche 1 bis 11, **dadurch gekennzeichnet,** daß sie in einstückiger Ausführung ein Schaltergehäuse sowie Verbinder (72) trägt, die mit den besagten Schaltern verbunden sind.

13. Lenksäule nach Anspruch 12, **dadurch gekennzeichnet**, daß mindestens ein Verbinder (72), der zu dem besagten Gehäuse (1) gehört, Flachkontakte zur Überbrückung des betreffenden Schalters aufweist.

14. Lenksäule nach einem der Ansprüche 1 bis 13, **dadurch gekennzeichnet,** daß sie in einstückiger Ausführung das Rohr des Lenkradschlosses des Kraftfahrzeugs trägt.

15. Lenksäule nach einem der Ansprüche 1 bis 14, **dadurch gekennzeichnet,** daß die elektrischen Leiter (6) zumindest teilweise in die Lenksäule eingelassen sind.
